# FASCICULE DE BREVET EUROPEEN

(11) **EP 3 600 964 B1**
(45) Date de publication et mention de la délivrance du brevet: **24.02.2021**
(21) Numéro de dépôt: 18712997.8
(22) Date de dépôt: 12.03.2018
(51) Int. Cl.: B60Q 1/50

(54) **DISPOSITIF DE SIGNALISATION DE PHASE(S) DE CONDUITE D'UN VÉHICULE AUTONOME**
VORRICHTUNG ZUR SIGNALISIERUNG DER FAHRPHASE(N) EINES AUTONOMEN FAHRZEUGS
DEVICE FOR SIGNALLING DRIVING PHASE(S) OF AN AUTONOMOUS VEHICLE

(30) Priorité: 23.03.2017 FR 1752402
(43) Date de publication de la demande: 05.02.2020
(73) Titulaire: PSA Automobiles SA, 78300 Poissy (FR)
(72) Inventeur: POGNON, Jean Luc, 92800 Puteaux (FR); DIAKITE KABA, Saran, 91570 Bièvres (FR); BREVET, Franck, 78150 Le Chesnay (FR); DELENNE, Sandrine, 91120 Palaiseau (FR); CHARTON, Virgile, 75016 Paris 16 (FR)
(86) Numéro de dépôt international: PCT/FR2018/050577
(87) Numéro de publication internationale: WO 2018/172650

(56) Documents cités:
- WO-A1-2016/068273
- DE-A1-102011 112 577
- DE-A1-102014 209 984

## Description

L'invention concerne les véhicules à conduite autonome, éventuellement de type automobile, et plus précisément la signalisation de tels véhicules.

Comme le sait l'homme de l'art, certains véhicules, généralement de type automobile, comprennent un dispositif d'assistance chargé de les conduire sans que leur conducteur n'agisse sur leur volant et/ou leurs pédales, d'où leur désignation sous l'expression « véhicule à conduite autonome » (ou plus simplement véhicule autonome).

Certains de ces véhicules à conduite autonome peuvent être au choix conduits par un conducteur pendant une phase de conduite manuelle, ou de façon totalement autonome pendant une phase de conduite autonome, et il existe une phase de transition survenant entre une phase de conduite autonome et une phase de conduite manuelle.

Pendant une phase de conduite autonome, c'est le dispositif d'assistance qui gère totalement la conduite, qu'il y ait ou non un conducteur dans le véhicule. Pendant une phase de transition entre une phase de conduite autonome et une phase de conduite manuelle, pouvant durer plusieurs secondes, le conducteur reprend le contrôle complet de la conduite après sollicitations (par exemple visuelles ou sonores) du véhicule, et donc le dispositif d'assistance cesse de contrôler le véhicule. Pendant une phase de transition entre une phase de conduite manuelle et une phase de conduite autonome, pouvant également durer plusieurs secondes, le dispositif d'assistance prend le contrôle de la conduite et donc le conducteur cesse de contrôler le véhicule, selon le niveau d'automatisation.

DE102011112577 A1 décrit un procédé et un dispositif pour un système d'assistance qui sert à effectuer une manœuvre de conduite autonome ou semi-autonome d'un véhicule, par exemple un système d'assistance au stationnement dans un véhicule, dans lequel au moyen d'un système de caméra, des données d'image de l'acquisition de l'environnement d'un véhicule sont obtenues et traitées afin d'effectuer la manœuvre de conduite. Au moins une direction dans laquelle le véhicule se déplace lors de l'exécution de la manœuvre de conduite est indiquée au moyen d'au moins un dispositif de signal lumineux.

DE102014209984 A1 décrit un procédé et un dispositif pour l'identification d'un véhicule autonome en mouvement afin de prévenir les usagers de la route en particulier par une position des rétroviseurs ou un signal lumineux sur les rétroviseurs.

WO2016/068273 A1 & US2017/225567 A1 décrivent un système d'affichage de conduite automatique pourvu d'un dispositif de commande de conduite automatique pour exécuter une conduite automatique, d'un dispositif d'affichage de conduite automatique effectuant une détermination de son état d'affichage possible à partir de l'extérieur du véhicule, et d'un dispositif à bord.

Lorsqu'un véhicule à conduite autonome circule sans conducteur ou avec son conducteur faisant autre chose que le conduire, cela peut surprendre, voire paniquer, les personnes (usagers des voies de circulation ou piétons) qui sont situées à côté et qui l'observent, ce qui peut provoquer chez certaines d'entre elles des réactions anormales et donc potentiellement dangereuses. De telles réactions perdureront tant qu'il sera impossible pour un tiers de savoir si le véhicule qu'il croise comprend un dispositif d'assistance pour la conduite autonome activé.

L'invention a notamment pour but d'améliorer la situation.

Elle propose notamment à cet effet un dispositif de signalisation destiné à équiper un véhicule propre à être conduit par un conducteur pendant une phase de conduite manuelle et comprenant un dispositif d'assistance propre à le conduire de façon totalement autonome pendant une phase de conduite autonome.

Ce dispositif de signalisation se caractérise par le fait qu'il comprend :
- des moyens de signalisation propres à être installés sur au moins deux parties latérales du véhicule et à générer une première lumière d'une première couleur choisie, visible de l'extérieur du véhicule, en cas de réception d'une première commande, et
- des moyens de contrôle propres à générer la première commande pour les moyens de signalisation lorsque le véhicule est dans une phase de conduite autonome.

Grâce à cette signalisation par une première lumière sur au moins les parties latérales du véhicule, un tiers peut comprendre instantanément que ce véhicule est dans une phase de conduite autonome (contrôlée par son dispositif d'assistance), ce qui permet de le rassurer immédiatement.

Le dispositif de signalisation selon l'invention peut comporter d'autres caractéristiques qui peuvent être prises séparément ou en combinaison, et notamment :
- dans un premier mode de réalisation, ses moyens de contrôle peuvent être propres à générer la première commande lorsque le conducteur est absent du véhicule, et à générer une deuxième commande pour les moyens de signalisation lorsque le véhicule est dans une phase de conduite autonome et que le conducteur est présent dans le véhicule. Dans ce cas, ses moyens de signalisation peuvent être propres à générer une deuxième lumière d'une deuxième couleur choisie, visible de l'extérieur du véhicule, en cas de réception de cette deuxième commande ;
   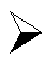 ses moyens de signalisation peuvent être propres à générer la deuxième lumière de façon intermittente en cas de réception d'une troisième commande. Dans ce cas, ses moyens de contrôle peuvent être propres à générer la troisième commande pour les moyens de signalisation lorsque le véhicule est dans une phase de transition entre une phase de conduite autonome et une phase de conduite manuelle ;
- dans un second mode de réalisation, ses moyens de contrôle peuvent être propres à générer la première commande lorsque le conducteur est présent dans le véhicule, et à générer une deuxième commande pour les moyens de signalisation lorsque le véhicule est dans une phase de conduite autonome et que le conducteur est absent du véhicule. Dans ce cas, ses moyens de signalisation peuvent être propres à générer une deuxième lumière d'une deuxième couleur choisie, visible de l'extérieur du véhicule, en cas de réception de la deuxième commande ;
   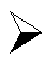 ses moyens de signalisation peuvent être propres à générer la première lumière de façon intermittente en cas de réception d'une troisième commande. Dans ce cas, ses moyens de contrôle peuvent être propres à générer la troisième commande pour les moyens de signalisation lorsque le véhicule est dans une phase de transition entre une phase de conduite autonome et une phase de conduite manuelle ;
- dans une variante de réalisation, ses moyens de signalisation peuvent être propres à générer une troisième lumière d'une troisième couleur choisie, visible de l'extérieur du véhicule, et éventuellement de façon intermittente, en cas de réception d'une troisième commande. Dans ce cas, ses moyens de contrôle peuvent être propres à générer la troisième commande pour les moyens de signalisation lorsque le véhicule est dans une phase de transition entre une phase de conduite autonome et une phase de conduite manuelle.

L'invention propose également un véhicule, éventuellement de type automobile, et propre à être conduit par un conducteur pendant une phase de conduite manuelle et comprenant un dispositif d'assistance propre à le conduire de façon totalement autonome pendant une phase de conduite autonome. Ce véhicule se caractérise par le fait qu'il comprend un dispositif de signalisation du type de celui présenté ci-avant, au moins partiellement installé sur au moins deux parties latérales.

Par exemple, une partie au moins des moyens de signalisation du dispositif de signalisation peut être installée sur des éléments du véhicule qui sont choisis parmi des portières latérales, des blocs optiques, un toit, des vitres latérales, un fond de caisse, des ailes avant, des ailes arrière, des pièces définissant des logos d'une marque du véhicule, une lunette arrière, un pare-brise, un pare-chocs avant, un pare-chocs arrière, un hayon, une porte de coffre arrière, et un capot avant.

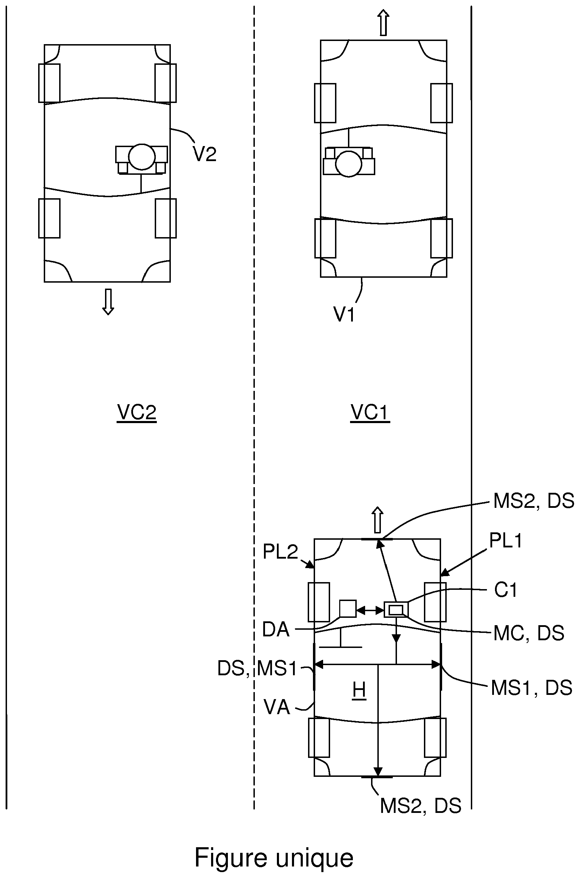

D'autres caractéristiques et avantages de l'invention apparaîtront à l'examen de la description détaillée ci-après, et du dessin annexé, sur lequel l'unique figure illustre schématiquement et fonctionnellement deux voies de circulation sur lesquelles circulent des véhicules dont l'un d'entre eux comprend un dispositif d'assistance pour la conduite autonome et un exemple de réalisation d'un dispositif de signalisation selon l'invention.

L'invention a notamment pour but de proposer un dispositif de signalisation DS destiné à équiper un véhicule VA à conduite autonome afin de signaler au tiers extérieurs les phases de conduite dans lesquelles il se trouve.

On entend ici par « véhicule à conduite autonome » un véhicule qui comprend un dispositif d'assistance DA chargé de le conduire sans qu'un passager n'agisse sur son volant et/ou sur ses pédales, et pouvant être activé ou désactivé (au moins partiellement) afin de permettre à un conducteur de le conduire pendant une phase de conduite manuelle. Par conséquent, un tel véhicule peut être au choix conduit par un conducteur pendant une phase de conduite manuelle, de façon totalement autonome pendant une phase de conduite autonome (sous contrôle de son dispositif d'assistance DA), et de façon autonome puis manuelle pendant une phase de transition survenant entre une phase de conduite autonome et une phase de conduite manuelle (passation de relais du dispositif d'assistance DA au conducteur), ou inversement de façon manuelle puis autonome pendant une phase de transition survenant entre une phase de conduite manuelle et une phase de conduite autonome (passation de relais du conducteur au dispositif d'assistance DA).

Le dispositif d'assistance DA assure le contrôle du véhicule en fonction, notamment, d'informations relatives à l'environnement extérieur du véhicule et fournies au moins par des moyens d'analyse de l'environnement extérieur embarqués dans ce dernier. Pour ce faire, le dispositif d'assistance DA détermine en permanence la trajectoire optimale du véhicule dans le cadre d'une conduite automatisée, et, lors de chaque phase de conduite autonome, il contrôle l'angle du volant et la vitesse du véhicule pour que ce dernier suive au mieux la trajectoire optimale déterminée.

Dans ce qui suit, on considère, à titre d'exemple non limitatif, que le véhicule autonome VA est de type automobile. Il s'agit par exemple d'une voiture. Mais l'invention n'est pas limitée à ce type de véhicule. Elle concerne en effet tout type de véhicule à conduite autonome, et donc non seulement les véhicules terrestres, mais également les véhicules maritimes (ou fluviaux), comme par exemple les taxis fluviaux, et les aéronefs.

Sur l'unique figure se trouve schématiquement et fonctionnellement représentée une route comprenant deux voies de circulation VC1 et VC2 sur lesquelles circulent trois véhicules V1, V2 et VA. Cette route est par exemple une rue à double sens d'une ville.

Dans cet exemple, un véhicule autonome VA circule selon un premier sens de circulation sur la première voie de circulation VC1, derrière un véhicule V1 non autonome, et un autre véhicule V2 non autonome circule sur la seconde voie de circulation VC2 selon un second sens de circulation opposé au premier sens de circulation. On notera qu'ici le véhicule autonome VA ne comprend pas de conducteur, éventuellement de façon temporaire.

Le véhicule autonome VA comprend un dispositif d'assistance DA, chargé de le conduire sans qu'un passager n'agisse sur son volant, et un dispositif de signalisation DS selon l'invention.

Comme illustré sur l'unique figure, un dispositif de signalisation DS comprend au moins des moyens de signalisation MSj et des moyens de contrôle MC.

Les moyens de signalisation MSj sont propres (ou agencés de manière) à être installés sur au moins deux parties latérales PLk (k = 1 ou 2) du véhicule VA, et à générer une première lumière d'une première couleur choisie, visible de l'extérieur du véhicule VA, en cas de réception d'une première commande.

On entend ici par « parties latérales » des parties qui sont situées sensiblement sur les deux côtés longitudinaux du véhicule VA, où sont notamment installées les portières latérales permettant aux passagers de pénétrer dans l'habitacle H.

Par ailleurs, on entend ici par « visible de l'extérieur du véhicule » le fait que la lumière générée soit visible par un tiers situé à l'extérieur du véhicule VA, et notamment en regard de l'une quelconque des deux parties latérales PLk de ce dernier (VA). Par conséquent, la lumière peut être émise sur une face externe d'un élément du véhicule VA ou sur une face interne transparente d'un élément du véhicule VA.

On notera que les moyens de signalisation MSj comprennent au moins une source de photons, éventuellement associée à au moins un élément optique, comme par exemple un guide de lumière, une fibre optique, un réflecteur, ou une lentille. Chaque source de photons est alimentée par le véhicule et peut, par exemple et non limitativement, comprendre au moins une diode électroluminescente de type classique (ou LED (« Light-Emitting Diode »)) ou de type organique (ou OLED (« Organic Light-Emitting Diode »)), ou bien au moins une diode laser.

A titre d'exemples non limitatifs, une partie au moins des moyens de signalisation MSj peut être installée sur des éléments du véhicule VA qui sont choisis parmi les portières latérales, des blocs optiques, le toit (ou pavillon), des vitres latérales, le fond de caisse, les ailes avant, les ailes arrière, des pièces définissant des logos de la marque du véhicule VA, la lunette arrière, le pare-brise, le pare-chocs avant, le pare-chocs arrière, le hayon arrière ou la porte de coffre arrière, et le capot avant.

On notera que dans l'exemple illustré non limitativement sur l'unique figure, les moyens de signalisation MS1 (j = 1) comprennent des sources de photons solidarisées aux portières latérales avant et aux portières latérales arrière (dans une continuité pour constituer deux bandes lumineuses rectilignes de grande longueur). Mais elles pourraient constituer deux bandes lumineuses rectilignes de petite longueur, ou bien deux bandes lumineuses curvilignes de plus ou moins grande longueur, ou encore deux structures lumineuses fermées sensiblement annulaires, par exemple et non limitativement.

Ici, la solidarisation des sources de photons peut se faire sur les faces externes des parties métalliques des portières latérales ou sur les faces internes ou externes des vitres des portières latérales, l'important étant qu'elles soient visibles de l'extérieur. Mais comme évoqué plus haut, en variante ou en complément, les sources de photons pourraient être installées sur ou dans des côtés latéraux de blocs optiques avant et/ou arrière, ou sur des côtés latéraux du toit (ou pavillon), ou sur des côtés latéraux externes du fond de caisse, ou sur les faces externes des ailes avant et/ou arrière, ou sur des côtés latéraux des pare-chocs avant et/ou arrière, par exemple.

Les moyens de contrôle MC sont propres à générer la première commande pour les moyens de signalisation MSj lorsque le véhicule VA est dans une phase de conduite autonome.

Ainsi, lorsqu'un tiers observe la première lumière, générée de façon automatique et indépendamment de toute analyse de l'environnement, sur au moins l'une des parties latérales PLk du véhicule VA, il comprend instantanément que ce dernier (VA) est un véhicule autonome se trouvant dans une phase de conduite autonome (contrôlée par son dispositif d'assistance DA), ce qui est de nature à le rassurer immédiatement.

On notera que dans l'exemple de réalisation illustré non limitativement sur l'unique figure, les moyens de contrôle MC font partie d'un calculateur C1, qui assure éventuellement au moins une autre fonction au sein du véhicule VA, et qui est de préférence connecté au réseau de communication du véhicule VA (éventuellement de type multiplexé et permettant les échanges d'informations entre équipements électroniques embarqués). Mais cela n'est pas obligatoire. En effet, le dispositif de signalisation DS pourrait comprendre son propre calculateur comportant ses moyens de contrôle MC et connecté à l'éventuel réseau de communication du véhicule VA. Par ailleurs, les moyens de contrôle MC peuvent être réalisés sous la forme de modules logiciels (ou « software ») ou bien d'une combinaison de circuits ou composants électroniques (ou « hardware ») et de modules logiciels.

On notera également que les moyens de contrôle MC peuvent être informés par le dispositif d'assistance DA de la phase de conduite dans laquelle se trouve leur véhicule VA à l'instant considéré, soit via une connexion directe entre le calculateur C1 et le dispositif d'assistance DA, soit indirectement via un autre calculateur et/ou l'éventuel réseau de communication du véhicule VA.

Afin de permettre aux tiers de différencier les phases de conduite autonome avec et sans conducteur, plusieurs modes de réalisation peuvent être envisagés.

Dans un premier mode de réalisation les moyens de contrôle MC peuvent être propres à générer la première commande lorsque le conducteur est absent du véhicule VA, et à générer une deuxième commande pour les moyens de signalisation MSj lorsque le véhicule VA est dans une phase de conduite autonome et que le conducteur est présent dans le véhicule VA. Par ailleurs, dans ce premier mode de réalisation les moyens de signalisation MSj sont propres à générer une deuxième lumière d'une deuxième couleur choisie, visible de l'extérieur du véhicule VA, en cas de réception de la deuxième commande.

Ainsi, lorsqu'un tiers observe la première lumière sur au moins l'une des parties latérales PLk du véhicule VA, il comprend instantanément que ce dernier (VA) est un véhicule autonome se trouvant dans une phase de conduite autonome sans conducteur (contrôlée par son dispositif d'assistance DA). Et, lorsqu'un tiers observe la deuxième lumière sur au moins l'une des parties latérales PLk du véhicule VA, il comprend instantanément que ce dernier (VA) est un véhicule autonome se trouvant dans une phase de conduite autonome avec un conducteur (mais contrôlée par le seul dispositif d'assistance DA).

A titre d'exemple purement illustratif la première couleur de la première lumière peut être blanche et la deuxième couleur de la deuxième lumière peut être bleue. Il ne s'agit ici que d'un exemple, et donc d'autres couleurs pourront être choisies, éventuellement en fonction de réglementations en vigueur.

On notera que dans ce premier mode de réalisation les moyens de signalisation MSj peuvent être également propres à générer la deuxième lumière de façon intermittente en cas de réception d'une troisième commande. Dans ce cas, les moyens de contrôle MC sont propres à générer la troisième commande pour les moyens de signalisation MSj lorsque le véhicule VA est dans une phase de transition entre une phase de conduite autonome et une phase de conduite manuelle.

Si l'on passe d'une phase de conduite autonome avec conducteur à une phase de conduite manuelle, le tiers va observer la deuxième lumière en continue (phase de conduite autonome), puis de façon intermittente (phase de transition), puis la disparition de cette deuxième lumière (phase de conduite manuelle suite à la reprise totale du contrôle du véhicule VA par son conducteur). En revanche, si l'on passe d'une phase de conduite manuelle à une phase de conduite autonome avec conducteur, le tiers va observer une absence de lumière (phase de conduite manuelle), puis la deuxième lumière de façon intermittente (phase de transition), et finalement la deuxième lumière en continue (phase de conduite autonome suite à la reprise totale du contrôle du véhicule VA par le dispositif d'assistance DA).

Dans un second mode de réalisation les moyens de contrôle MC peuvent être propres à générer la première commande lorsque le conducteur est présent dans le véhicule VA, et à générer une deuxième commande pour les moyens de signalisation MSj lorsque le véhicule VA est dans une phase de conduite autonome et que le conducteur est absent du véhicule VA. Par ailleurs, dans ce premier mode de réalisation les moyens de signalisation MSj sont propres à générer une deuxième lumière d'une deuxième couleur choisie, visible de l'extérieur du véhicule VA, en cas de réception de la deuxième commande.

Ainsi, lorsqu'un tiers observe la première lumière sur au moins l'une des parties latérales PLk du véhicule VA, il comprend instantanément que ce dernier (VA) est un véhicule autonome se trouvant dans une phase de conduite autonome avec un conducteur (mais contrôlée par le seul dispositif d'assistance DA). Et, lorsqu'un tiers observe la deuxième lumière sur au moins l'une des parties latérales PLk du véhicule VA, il comprend instantanément que ce dernier (VA) est un véhicule autonome se trouvant dans une phase de conduite autonome sans conducteur (contrôlée par son dispositif d'assistance DA).

A titre d'exemple purement illustratif la première couleur de la première lumière peut être bleue et la deuxième couleur de la deuxième lumière peut être blanche. Il ne s'agit ici que d'un exemple, et donc d'autres couleurs pourront être choisies, éventuellement en fonction de réglementations en vigueur.

On notera que dans ce second mode de réalisation les moyens de signalisation MSj peuvent être également propres à générer la première lumière de façon intermittente en cas de réception d'une troisième commande. Dans ce cas, les moyens de contrôle MC sont propres à générer la troisième commande pour les moyens de signalisation MSj lorsque le véhicule VA est dans une phase de transition entre une phase de conduite autonome et une phase de conduite manuelle.

Si l'on passe d'une phase de conduite autonome avec conducteur à une phase de conduite manuelle, le tiers va observer la première lumière en continue (phase de conduite autonome), puis de façon intermittente (phase de transition), puis la disparition de cette première lumière (phase de conduite manuelle suite à la reprise totale du contrôle du véhicule VA par son conducteur). En revanche, si l'on passe d'une phase de conduite manuelle à une phase de conduite autonome avec conducteur, le tiers va observer une absence de lumière (phase de conduite manuelle), puis la première lumière de façon intermittente (phase de transition), et finalement la première lumière en continue (phase de conduite autonome suite à la reprise totale du contrôle du véhicule VA par le dispositif d'assistance DA).

On notera qu'au lieu d'utiliser une première ou deuxième lumière de façon intermittente pendant une phase de transition, on peut utiliser une troisième lumière d'une troisième couleur choisie pendant cette dernière. Dans cette variante ou option, les moyens de signalisation MSj peuvent être propres à générer une troisième lumière d'une troisième couleur choisie, visible de l'extérieur du véhicule VA, en cas de réception d'une troisième commande. Dans ce cas, les moyens de contrôle MC sont propres à générer la troisième commande pour les moyens de signalisation MSj lorsque le véhicule VA est dans une phase de transition entre une phase de conduite autonome et une phase de conduite manuelle.

Ainsi, si l'on passe d'une phase de conduite autonome avec conducteur à une phase de conduite manuelle, le tiers va observer la première (ou éventuelle deuxième) lumière en continue (phase de conduite autonome), puis la troisième lumière en continue ou éventuellement de façon intermittente (phase de transition), puis l'absence de lumière (phase de conduite manuelle suite à la reprise totale du contrôle du véhicule VA par son conducteur). De même, si l'on passe d'une phase de conduite manuelle à une phase de conduite autonome avec conducteur, le tiers va observer une absence de lumière (phase de conduite manuelle), puis la troisième lumière en continue ou éventuellement de façon intermittente (phase de transition), et finalement la première (ou éventuelle deuxième) lumière en continue (phase de conduite autonome suite à la reprise totale du contrôle du véhicule VA par le dispositif d'assistance DA).

A titre d'exemple purement illustratif la troisième couleur de la troisième lumière peut être orange ou rouge. Il ne s'agit ici que d'un exemple, et donc une autre couleur pourra être choisie, éventuellement en fonction de réglementations en vigueur.

On notera que pendant une phase de transition, au lieu d'utiliser une première ou deuxième lumière de façon intermittente ou une troisième lumière d'une troisième couleur choisie, les moyens de signalisation MSj peuvent être propres, à réception de la première (ou éventuelle deuxième ou troisième) commande, à faire croître l'intensité de la première (ou éventuelle deuxième) lumière entre une valeur nulle et une valeur maximale (lors de la transition de la phase de conduite manuelle à la phase de conduite autonome) ou inversement entre une valeur maximale et une valeur nulle (lors de la transition de la phase de conduite autonome à la phase de conduite manuelle).

On notera également que les différentes couleurs mentionnées ci-avant peuvent résulter de source(s) de photons délivrant respectivement des photons de longueurs d'onde différentes, ou bien de source(s) de photons délivrant chacune des photons de toutes les longueurs d'onde correspondant à ces différentes couleurs.

On notera également, comme illustré non limitativement sur l'unique figure, que les moyens de signalisation MS2 (j = 2) peuvent comprendre, en complément, des sources de photons solidarisées à une partie avant et/ou à une partie arrière du véhicule VA, lorsque cela est autorisé par les réglementations en vigueur. Par exemple, ces sources de photons complémentaires peuvent être installées sur des parties avant de blocs optiques avant et/ou sur des parties arrière de blocs optiques arrière, ou sur une partie avant et/ou une partie arrière du toit (ou pavillon), ou sur une face interne ou externe du pare-brise, ou sur le capot avant et/ou sur la portière de coffre (ou le hayon) arrière, ou sur une partie avant et/ou une partie arrière du fond de caisse, ou sur une face interne ou externe de la lunette arrière, ou sur une partie avant du pare-chocs avant et/ou une partie arrière du pare-chocs arrière, ou encore sur un logo de marque.

Dans cette dernière option, les sources de photons complémentaires peuvent constituer des bandes lumineuses rectilignes ou curvilignes de plus ou moins grande longueur, ou bien des structures lumineuses fermées sensiblement annulaires, ou encore des signes ou sigles lumineux, par exemple et non limitativement.

Grâce à la signalisation lumineuse, automatique et indépendante de toute analyse de l'environnement, offerte par l'invention, un tiers qui observe un véhicule autonome peut désormais déterminer instantanément la phase de conduite dans laquelle se trouve ce dernier, ce qui est de nature à le rassurer immédiatement.

## Revendications

1. Dispositif de signalisation (DS) pour un véhicule (VA) propre à être conduit par un conducteur pendant une phase de conduite manuelle et comprenant un dispositif d'assistance (DA) propre à le conduire de façon totalement autonome pendant une phase de conduite autonome, des moyens de signalisation (MSj) propres à être installés sur au moins deux parties latérales (PLk) dudit véhicule (VA) et à générer une première lumière d'une première couleur choisie, visible de l'extérieur dudit véhicule (VA), en cas de réception d'une première commande, et des moyens de contrôle (MC) propres à générer ladite première commande pour lesdits moyens de signalisation (MSj) lorsque ledit véhicule (VA) est dans une phase de conduite autonome, **caractérisé en ce que** lesdits moyens de contrôle (MC) sont propres à générer ladite première commande lorsque ledit conducteur est absent dudit véhicule (VA), et à générer une deuxième commande pour lesdits moyens de signalisation (MSj) lorsque ledit véhicule (VA) est dans une phase de conduite autonome et que ledit conducteur est présent dans ledit véhicule (VA), ou à générer ladite première commande lorsque ledit conducteur est présent dans ledit véhicule (VA), et à générer une deuxième commande pour lesdits moyens de signalisation (MSj) lorsque ledit véhicule (VA) est dans une phase de conduite autonome et que ledit conducteur est absent dudit véhicule (VA), et **en ce que** lesdits moyens de signalisation (MSj) sont propres à générer une deuxième lumière d'une deuxième couleur choisie, visible de l'extérieur dudit véhicule (VA), en cas de réception de ladite deuxième commande.

2. Dispositif selon la revendication 1, **caractérisé en ce que** lesdits moyens de signalisation (MSj) sont propres à générer une troisième lumière d'une troisième couleur choisie, visible de l'extérieur dudit véhicule (VA), en cas de réception d'une troisième commande, et **en ce que** lesdits moyens de contrôle (MC) sont propres à générer ladite troisième commande pour lesdits moyens de signalisation (MSj) lorsque ledit véhicule (VA) est dans une phase de transition entre une phase de conduite autonome et une phase de conduite manuelle.

3. Véhicule (VA) propre à être conduit par un conducteur pendant une phase de conduite manuelle et comprenant un dispositif d'assistance (DA) propre à le conduire de façon totalement autonome pendant une phase de conduite autonome, **caractérisé en ce qu'**il comprend un dispositif de signalisation (DS) selon l'une des revendications précédentes, au moins partiellement installé sur au moins deux parties latérales (PLk).

4. Véhicule selon la revendication 3, **caractérisé en ce qu'**une partie au moins des moyens de signalisation (MSj) dudit dispositif de signalisation (DS) est installée sur des éléments dudit véhicule (VA) choisis parmi des portières latérales, des blocs optiques, un toit, des vitres latérales, un fond de caisse, des ailes avant, des ailes arrière, des pièces définissant des logos d'une marque dudit véhicule (VA), une lunette arrière, un pare-brise, un pare-chocs avant, un pare-chocs arrière, un hayon, une porte de coffre arrière, et un capot avant.

5. Véhicule selon l'une des revendications 3 et 4, **caractérisé en ce qu'**il est de type automobile.

## Patentansprüche

1. Signalisierungsvorrichtung (DS) für ein Fahrzeug (VA), das dazu geeignet ist, während einer manuellen Fahrphase von einem Fahrer geführt zu werden, und das eine Assistenzvorrichtung (DA) umfasst, die dazu geeignet ist, es während einer autonomen Fahrphase völlig autonom zu führen, Signalisierungsmittel (MSj), die dazu geeignet sind, an mindestens zwei seitlichen Teilen (PLk) des Fahrzeugs (VA) installiert zu werden und ein erstes Licht einer ersten gewählten Farbe zu erzeugen, von der Außenseite des Fahrzeugs (VA) sichtbar ist, im Falle des Empfangs eines ersten Befehls, und eine Steuereinrichtung (MC), die in der Lage ist, den ersten Befehl für die Signalisierungseinrichtung (MSj) zu erzeugen, wenn sich das Fahrzeug (VA) in einer autonomen Fahrphase befindet, **dadurch gekennzeichnet, dass** die Steuermittel (MC) geeignet sind, den ersten Befehl zu erzeugen, wenn der Fahrer von dem Fahrzeug (VA) abwesend ist, und einen zweiten Befehl für die Signalisierungsmittel (MSj) zu erzeugen, wenn das Fahrzeug (VA) in einer Phase des autonomen Fahrens ist und der Fahrer in dem Fahrzeug (VA) anwesend ist, oder den ersten Befehl zu erzeugen, wenn der Fahrer in dem Fahrzeug (VA) anwesend ist, und zum Erzeugen eines zweiten Befehls für die Signalisierungsmittel (MSj), wenn sich das Fahrzeug (VA) in einer autonomen Fahrphase befindet und der Fahrer von dem Fahrzeug (VA) abwesend ist, und dadurch, dass die Signalisierungsmittel (MSj) angepasst sind, um ein zweites Licht einer zweiten gewählten Farbe zu erzeugen, das von außerhalb des Fahrzeugs (VA) sichtbar ist, im Falle des Empfangs des zweiten Befehls.

2. Vorrichtung nach Anspruch 1, **dadurch gekennzeichnet, dass** die Signalisierungsmittel (MSj) geeignet sind, im Falle des Empfangs eines dritten Befehls ein drittes Licht einer dritten gewählten Farbe zu erzeugen, das von außerhalb des Fahrzeugs (VA) sichtbar ist, und dass die Steuermittel (MC) geeignet sind, den dritten Befehl für die Signalisierungsmittel (MSj) zu erzeugen, wenn sich das Fahrzeug (VA) in einer Übergangsphase zwischen einer autonomen Fahrphase und einer manuellen Fahrphase befindet.

3. Fahrzeug (VA), das dazu geeignet ist, während einer manuellen Fahrphase von einem Fahrer geführt zu werden, und das eine Assistenzvorrichtung (DA) umfasst, die dazu geeignet ist, es während einer autonomen Fahrphase vollständig autonom zu führen, **dadurch gekennzeichnet, dass** es eine Signalisierungsvorrichtung (DS) nach einem der vorhergehenden Ansprüche umfasst, die zumindest teilweise an mindestens zwei Seitenteilen (PLk) installiert ist.

4. Fahrzeug nach Anspruch 3, **dadurch gekennzeichnet, dass** mindestens ein Teil der Signalisierungsmittel (MSj) der Signalisierungsvorrichtung (DS) an Elementen des Fahrzeugs (VA) installiert ist, die aus Seitentüren, optischen Einheiten, einem Dach ausgewählt sind, Seitenfenster, einen Karosserieboden, vordere Kotflügel, hintere Kotflügel, Teile, die Logos einer Marke des Fahrzeugs (VA) definieren, eine Heckscheibe, eine Windschutzscheibe, einen vorderen Stoßfänger, einen hinteren Stoßfänger, eine Heckklappe, eine hintere Kofferraumtür und eine vordere Motorhaube.

5. Fahrzeug nach einem der Ansprüche 3 und 4, **dadurch gekennzeichnet, dass** es

## Claims

1. Signalling device (DS) for a vehicle (VA) suitable to be driven by a driver during a manual driving phase and comprising an assistance device (DA) suitable to drive it in a totally autonomous manner during an autonomous driving phase, signalling means (MSj) suitable to be installed on at least two lateral parts (PLk) of said vehicle (VA) and to generate a first light of a first chosen color, visible from outside said vehicle (VA), in the event of receiving a first command, and control means (MC) capable of generating said first command for said signalling means (MSj) when said vehicle (VA) is in a phase of autonomous driving, **characterized in that** said control means (MC) are adapted to generate said first command when said driver is absent from said vehicle (VA), and to generate a second command for said signalling means (MSj) when said vehicle (VA) is in a phase of autonomous driving and said driver is present in said vehicle (VA), or to generate said first command when said driver is present in said vehicle (VA), and to generate a second command for said signalling means (MSj) when said vehicle (VA) is in an autonomous driving phase and said driver is absent from said vehicle (VA), and **in that** said signalling means (MSj) are adapted to generate a second light of a second chosen color, visible from outside said vehicle (VA), in the event of reception of said second command.

2. A device according to claim 1, **characterized in that** said signalling means (MSj) are adapted to generate a third light of a third chosen color, visible from outside said vehicle (VA), in the event of reception of a third command, and **in that** said control means (MC) are adapted to generate said third command for said signalling means (MSj) when said vehicle (VA) is in a transition phase between an autonomous driving phase and a manual driving phase.

3. Vehicle (VA) suitable for being driven by a driver during a manual driving phase and comprising an assistance device (DA) suitable for driving it in a completely autonomous manner during an autonomous driving phase, **characterized in that** it comprises a signalling device (DS) according to one of the preceding claims, at least partially installed on at least two lateral parts (PLk).

4. Vehicle according to claim 3, **characterized in that** at least part of the signalling means (MSj) of said signalling device (DS) is installed on parts of said vehicle (VA) selected from side doors, light units, roof, side windows, a body panel, front fenders, rear fenders, parts defining logos of a brand of said vehicle (VA), a rear window, a windshield, a front bumper, a rear bumper, a tailgate, a rear trunk door, and a front hood.

5. Vehicle according to one of claims 3 and 4, **characterized in that** it is of the automotive type.
